(19) Europäisches Patentamt / European Patent Office / Office européen des brevets

(11) **EP 2 950 236 A1**

(12) **DEMANDE DE BREVET EUROPEEN**

(43) Date de publication:
**02.12.2015 Bulletin 2015/49**

(21) Numéro de dépôt: **15168725.8**

(22) Date de dépôt: **21.05.2015**

(51) Int Cl.:
**G06K 9/00** (2006.01)          **G06K 9/32** (2006.01)
**G06K 9/46** (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **28.05.2014 FR 1454877**

(71) Demandeur: **SAGEMCOM DOCUMENTS SAS 92500 Rueil Malmaison (FR)**

(72) Inventeurs:
• **Carrie, Aurore**
  **92500 RUEIL MALMAISON (FR)**
• **Berger, Jérôme**
  **92500 RUEIL MALMAISON (FR)**

(74) Mandataire: **Maillet, Alain**
  **Cabinet Le Guen Maillet**
  **5, place Newquay**
  **B.P. 70250**
  **35802 Dinard Cedex (FR)**

(54) **PROCÉDÉ ET DISPOSITIF D'IDENTIFICATION D'AU MOINS UNE PAGE UTILE DANS UN DOCUMENT**

(57)    Procédé d'identification d'au moins une page utile dans un document comprenant une pluralité de pages, une page utile comprenant des informations utiles pour une application cible destinée à utiliser ces informations, le procédé comprenant une étape d'obtention (101) pour chaque page du document d'une image numérisée résultant d'une numérisation de la dite page, une étape de détection (102) de contours contenus dans chacune des images numérisées de manière à obtenir pour chacune des images numérisées une image représentative de contours, pour chacune des images représentatives de contours, une étape de calcul (103) d'une valeur représentative d'une entropie de l'image représentative de contours, une étape de détermination (104) d'au moins une page utile à partir des valeurs représentatives d'entropies obtenues.

Obtention images
$I_{recto}$ et $I_{verso}$
101

Détection de contours
102

Calcul entropie
103

Détermination face utile
104

Fig. 1

**Description**

La présente invention concerne un procédé et un dispositif d'identification d'au moins une page utile dans un document comprenant une pluralité de pages, une page utile contenant des informations destinées à être utilisées par une application cible et un système de numérisation mettant en oeuvre ledit procédé ou comprenant ledit dispositif.

De nos jours, stocker un grand volume de documents papier pose de nombreux problèmes. Ces documents papier représentent en effet un encombrement conséquent, ce qui pose des problèmes de coût et de logistique. Une tendance actuelle forte consiste donc à dématérialiser les documents papiers dans un format numérique. Certains dispositifs ou certaines méthodes tels que les dispositifs ou méthodes de ROC (Reconnaissance Optique de Caractères : « Optical Character Recognition (OCR) » en terminologie anglo-saxonne) vont plus loin dans la dématérialisation en extrayant des informations des documents. Les informations extraites sont en général des informations importantes ou pertinentes pour une application cible destinée à utiliser ces informations. Le gain en volume de stockage de données numériques est alors sensible puisque seules les informations pertinentes contenues dans le document sont stockées. Ces informations peuvent alors être stockées dans une base de données, ce qui facilite une utilisation ultérieure de ces informations.

Par ailleurs, les informations importantes ont parfois une répartition inégale dans un document. Par exemple, certains documents recto-verso, tels qu'une carte de visite, un permis de conduire, une carte d'identité, sont constitués d'une face (ou page) contenant des informations utiles pour une application cible (que nous appelons par la suite « face utile » (ou « page utile »)) et d'une face (ou page) ne contenant pas d'informations utiles pour ladite application cible (que nous appelons par la suite « face inutile » (ou « page inutile »). Dans le cas d'une carte de visite, une face utile peut par exemple contenir des informations telles qu'un nom de personne, un nom de société, une adresse de courriel, et un numéro de téléphone. Ces informations sont pertinentes pour certaines applications cibles telle qu'une application mettant en oeuvre un carnet d'adresse numérique. A contrario, la face inutile peut par exemple être vide ou contenir un logo d'une société. Les éventuelles informations contenues sur la face inutile d'une carte de visite sont alors sans intérêt pour l'application cible mettant en oeuvre un carnet d'adresse numérique.

Les dispositifs ou méthodes de ROC utilisent en général des méthodes de reconnaissance de caractères pour rechercher les informations importantes contenues dans un document. Les méthodes de reconnaissance de caractères sont en général complexes et leur mise en oeuvre a un coût calculatoire important. Pour réduire le coût calculatoire de ces méthodes, il est préférable de guider la recherche par exemple en pointant des zones dans lesquelles des informations importantes doivent être recherchées.

Un système de numérisation apte à numériser un document papier, peut prendre des formes diverses. Ce système de numérisation peut par exemple être un photocopieur, un scanner, un appareil photo numérique, une tablette ou un téléphone portable comprenant un dispositif d'acquisition d'image. Généralement, un tel système de numérisation ne prend pas en compte la répartition inégale des informations dans un document. Par exemple, dans le cas d'un document recto-verso tel qu'une carte de visite, les deux faces du document sont considérées d'égale importance, ce qui ne facilite pas une mise en oeuvre des méthodes de ROC. Les méthodes de ROC doivent en effet rechercher des informations importantes sur les deux faces. Dans un cas favorable, le système de numérisation peut être programmé pour considérer que la face utile d'un document est la face présentée en premier ou encore que dans un document, les pages utiles correspondent à des pages d'une certaine parité, par exemple des pages impaires. Cela suppose qu'un opérateur voulant numériser un document présentera effectivement la face utile en premier ou qu'il fournira des informations permettant de reconnaître les pages utiles d'un document. Dans le cas contraire, par exemple en cas d'erreur ou en cas de méconnaissance du fonctionnement du système de numérisation, une face (ou page) inutile est considérée comme une face (ou page) contenant des informations importantes, ce qui risque de provoquer l'extraction d'informations incohérentes par les méthodes de ROC.

La mise en oeuvre des méthodes de ROC serait grandement facilitée s'il était possible de distinguer automatiquement lors d'une numérisation d'un document, des faces (ou pages) utiles de faces (ou pages) inutiles.

L'invention a pour objectif de résoudre les problèmes mentionnés ci-dessus. L'invention vise notamment à proposer une méthode et un dispositif d'identification d'au moins une page (ou face) utile dans un document comprenant une pluralité de pages (ou faces), une page (ou face) utile comprenant des informations importantes pour une application cible destinée à utiliser ces informations.

A cet effet, selon un premier aspect de la présente invention, la présente invention concerne un procédé d'identification d'au moins une page utile dans un document comprenant une pluralité de pages, une page utile comprenant des informations utiles pour une application cible destinée à utiliser ces informations, le procédé comprenant une étape d'obtention pour chaque page du document d'une image numérisée résultant d'une numérisation de la dite page, une étape de détection de contours contenus dans chacune des images numérisées de manière à obtenir pour chacune des images numérisées une image représentative de contours, pour chacune des images représentatives de contours, une étape de calcul d'une valeur représentative d'une entropie de l'image représentative de contours, une étape de détermination d'au moins une page utile à partir des valeurs représentatives d'entropies obtenues.

Ledit procédé permet d'identifier automatiquement des pages utiles dans un document. De plus, le calcul de la mesure représentative de l'entropie sur une image de contours permet d'éviter que la mesure soit entachée par un bruit contenu dans l'image tel qu'un bruit de numérisation.

Selon un mode de réalisation, lorsque, parmi les valeurs représentatives d'une entropie calculée, une valeur représentative d'une entropie est plus élevée que l'autre ou les autres valeurs représentatives d'une entropie, la page correspondant à la valeur représentative d'une entropie la plus élevée est une page utile.

Selon un mode de réalisation, une valeur plus élevée est déterminée parmi les valeurs représentatives d'une entropie calculées, un écart est déterminé entre la valeur la plus élevée et chaque autre valeur, et si chaque écart est supérieur à un seuil, la page correspondant à la valeur représentative d'une entropie la plus élevée est une page utile.

Selon un mode de réalisation, une valeur plus élevée est déterminée parmi les valeurs représentatives d'une entropie calculées, un écart est déterminé entre la valeur la plus élevée et chaque autre valeur, et la page correspondant à la valeur représentative d'une entropie la plus élevée est une page utile, chaque autre page pour laquelle l'écart est inférieur à un seuil est une page utile, chaque autre page pour laquelle l'écart est supérieur au seuil n'étant pas une page utile.

De cette manière, une page utile est déterminée avec une bonne certitude.

Selon un mode de réalisation, le document est un document recto-verso comprenant deux pages.

Selon un mode de réalisation, la détection de contours est mise en oeuvre par un filtrage utilisant un filtre passe haut.

Le filtrage passe haut permet une détection simple et efficace des contours.

Selon un mode de réalisation, le filtre passe haut est un filtre à anneaux concentriques.

L'utilisation d'un filtre à anneaux concentriques dans la mise en oeuvre d'un filtre passe haut permet de s'affranchir de défauts inhérents aux filtres passes hauts classiques, tels que le coût de calcul pour un filtre non séparable ou la suppression de hautes fréquences représentatives de contours pour un filtre séparable.

Selon un mode de réalisation le filtre passe haut est appliqué sur les images numérisées.

Selon un mode de réalisation le filtrage passe haut est appliqué sur des images intégrales obtenues à partir des images numérisées.

L'application du filtre à anneaux concentriques sur des images intégrales permet une réduction d'un coût calculatoire associé à la mise en oeuvre du filtre.

Selon un mode de réalisation, les valeurs représentatives d'une entropie sont des valeurs représentatives d'une énergie des images représentatives de contours.

L'énergie d'une image est une valeur représentative de l'entropie simple à calculer.

Selon un mode de réalisation, une valeur représentative d'une énergie d'une images de contours est une somme de carrés de valeurs de pixels de ladite image de contours, ou une variance de l'image de contours, ou un nombre de pixels de l'image de contours dont une valeur de pixel est supérieure à un seuil, ou une valeur de pixel pour laquelle un pourcentage prédéterminé de pixels de l'image de contours ont une valeur de pixel inférieure à ladite valeur de pixel.

Selon un deuxième aspect de la présente invention, la présente invention concerne un dispositif d'identification d'au moins une page utile dans un document comprenant une pluralité de pages, une page utile comprenant des informations utiles pour une application cible destinée à utiliser ces informations, le dispositif comprenant, des moyens d'obtention, pour chaque page du document, d'une image numérisée résultant d'une numérisation de la dite page, des moyens de détection de contours contenus dans chacune des images numérisées de manière à obtenir pour chacune des images numérisées une image représentative de contours, des moyens de calcul, pour chacune des images représentatives de contours, d'une valeur représentative d'une entropie de l'image représentative de contours, des moyens de détermination d'au moins une page utile à partir des valeurs représentatives d'entropies obtenues.

Selon un troisième aspect de la présente invention, la présente invention concerne un système de numérisation comprenant un dispositif d'identification d'au moins une page utile dans un document comprenant une pluralité de pages selon le second aspect.

Selon un quatrième aspect de la présente invention, la présente invention concerne un système de numérisation mettant en oeuvre le procédé d'identification d'au moins une page utile dans un document comprenant une pluralité de pages selon le premier aspect.

Selon un cinquième aspect de la présente invention, la présente invention concerne un produit programme d'ordinateur, caractérisé en ce qu'il comporte des instructions pour mettre en oeuvre, par un dispositif, le procédé selon le premier aspect, lorsque ledit programme est exécuté par un processeur dudit dispositif.

Selon un sixième aspect de la présente invention, la présente invention concerne des moyens de stockage, caractérisés en ce qu'ils stockent un programme d'ordinateur comportant des instructions pour mettre en oeuvre, par un dispositif, le procédé selon le premier aspect lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 représente schématiquement un exemple de procédé d'identification d'une face utile dans un document recto-verso,

La Fig. 2 illustre schématiquement un exemple d'architecture matérielle d'un dispositif d'identification apte à mettre en oeuvre un procédé d'identification d'une face utile dans un document recto-verso,

La Fig. 3 représente schématiquement un exemple de filtre à anneaux concentriques,

La Fig. 4 représente schématiquement un exemple d'application d'un filtre à anneaux concentriques sur une image,

La Fig. 5 représente schématiquement un deuxième exemple de procédé d'identification d'une face utile dans un document recto-verso.

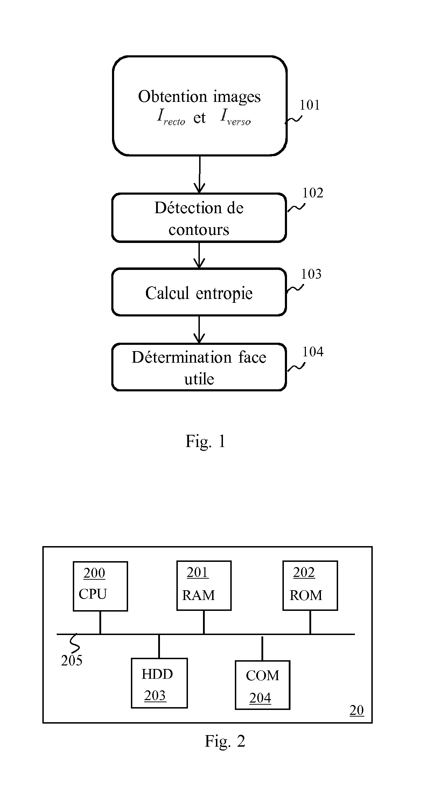

La **Fig. 1** représente schématiquement un premier exemple de procédé d'identification d'une face utile dans un document recto-verso, la face utile contenant des informations importantes pour une application cible.

Ce procédé peut être mis en oeuvre, par exemple, dans un système de numérisation, par un dispositif d'identification 20 selon l'invention apte à identifier au moins une face utile dans un document. Le dispositif d'identification 20 est décrit par la suite en relation avec la Fig. 2.

Le document recto-verso peut par exemple être une carte de visite. L'application cible peut par exemple être une application mettant en oeuvre un carnet d'adresses numérique. Des informations utiles pour cette application cible sont par exemple, un nom de personne, un nom de société, une adresse et un numéro de téléphone. Le document recto-verso peut aussi être une carte d'identité ou un permis de conduire. Dans ce cas, l'application cible peut être une application de conservation de données administratives. Les données importantes sont alors un nom de personne, une adresse, une date de naissance, un numéro de carte d'identité ou de permis de conduire.

On considère ici que la face utile a un contenu plus dense que la face inutile. En d'autres termes, la face utile est la face contenant le plus d'informations importantes au regard de l'application cible qui devra utiliser ces informations. Dans le cadre de l'invention, les informations importantes sont des caractères ou des groupes de caractères alpha-numériques. En terme de signal, les caractères alpha-numériques présents dans une image produisent des signaux complexes d'entropie élevée. Par conséquent, plus une image contient des caractères alpha-numériques, plus son entropie est élevée. L'objectif du procédé de la Fig. 1 consiste à calculer une valeur représentative de l'entropie pour chaque face du document recto-verso et à identifier la face utile comme la face ayant la valeur représentative de l'entropie la plus élevée.

Dans une étape 101, suite à une numérisation des deux faces du document recto-verso par le système de numérisation, le dispositif d'identification 20 obtient une image recto $I_{recto}$ et une image verso $I_{verso}$ correspondant chacune à une des faces du document recto-verso. Dans un mode de réalisation, les images $I_{recto}$ et $I_{verso}$ sont des images monochromes ne comportant qu'une composante pour chaque pixel de l'image.

Lors d'une étape 102, une méthode de détection de contours est appliquée par le dispositif d'identification 20 aux images $I_{recto}$ et $I_{verso}$. L'objectif de cette étape est d'obtenir pour l'image $I_{recto}$ (resp. $I_{verso}$), une image $I_{recto}^{c}$ (resp. $I_{verso}^{c}$) contenant uniquement des contours d'objets contenus dans l'image $I_{recto}$ (resp. $I_{verso}$). Un contour dans une image se caractérise par une haute fréquence spatiale. Un filtrage passe haut d'une image peut donc permettre de ne conserver que les hautes fréquences spatiales de l'image et donc les contours. Dans un mode de réalisation, l'image $I_{recto}^{c}$ (resp. $I_{verso}^{c}$) est obtenue en appliquant un filtre passe haut à l'image $I_{recto}$ (resp. $I_{verso}$). L'utilisation d'une image contenant des contours permet d'éliminer des éléments parasites de l'image, tels qu'un bruit de numérisation, qui pourrait polluer la mise en oeuvre de la suite du procédé.

Dans une étape 103, le dispositif d'identification 20 calcule, pour chacune des images $I_{recto}^{c}$ et $I_{verso}^{c}$, une mesure représentative de l'entropie. L'entropie du signal correspondant à une image peut être approximée par l'énergie de l'image. Il existe différentes méthodes de calcul de l'énergie d'une image. Dans un mode de réalisation, l'énergie $E_{recto}^{c}$ (resp. $E_{verso}^{c}$) de l'image $I_{recto}^{c}$ (resp. $I_{verso}^{c}$) est calculée en faisant la somme des carrés des valeurs des pixels de l'image $I_{recto}^{c}$ (resp. $I_{recto}^{c}$).

$$E_i^c = \sum_{0<x<L_{I_i^c},\, 0<y<H_{I_i^c}} I_i^c(x,y)^2$$

où *i* est une variable prenant la valeur « recto » ou « verso », $I_i^c(x,y)$ est un pixel de l'image $I_i^c$ situé à une position de coordonnée horizontale *x* et de coordonnée verticale *y*, $L_{I_i^c}$ et $H_{I_i^c}$ sont respectivement la largeur et la hauteur de l'image $I_i^c$.

Dans une étape 104, la face utile est déterminée à partir des informations d'énergie obtenues. Lors de l'étape 104, l'énergie $E_{recto}^c$ et l'énergie $E_{verso}^c$ sont comparées pour déterminer la face utile. La face utile est la face du document recto-verso associée à l'énergie la plus élevée.

Une fois identifiée, l'image correspondant à la face utile peut être envoyée ou désignée par le dispositif d'identification 20 à un dispositif de ROC, qui procédera à la recherche des informations importantes contenues dans cette image.

Dans un mode de réalisation, les images *I*$_{recto}$ et *I*$_{verso}$ sont des images couleur comprenant plusieurs composantes. Ces images couleur peuvent par exemple être des images RGB comprenant trois composantes de couleurs ou des images YUV ou YCbCr comprenant une composante de luminance et deux composantes de chrominance.

Dans un autre mode de réalisation de l'étape 102, d'autres méthodes de détection de contours sont utilisées. L'image $I_{recto}^c$ (resp. $I_{verso}^c$) peut ainsi être obtenue par l'application d'une méthode basée sur le calcul de dérivée première dans l'image *I*$_{recto}$ (resp. *I*$_{verso}$) (telles que les méthodes basées sur l'utilisation d'un filtre de Prewitt, un filtre de Sobel ou un filtre de Canny) ou des méthodes basées sur le calcul de dérivée seconde dans l'image *I*$_{recto}$ (resp. *I*$_{verso}$).

Dans un mode de réalisation, lorsque les images *I*$_{recto}$ et *I*$_{verso}$ sont des images couleur, la méthode de détection de contours peut être appliquée indépendamment sur chacune des composantes, ou sur une des composantes. Lorsque la méthode de détection de contours est appliquée sur une seule composante, on utilisera de préférence une composante de luminance. Si les images *I*$_{recto}$ et *I*$_{verso}$ sont des images RGB, on les transformera en images comprenant une composante de luminance et deux composantes de chrominance avant la mise en oeuvre de la méthode de détection de contours.

Dans un mode de réalisation, l'énergie $E_{recto}^c$ (resp. $E_{verso}^c$) est calculée sous la forme d'une variance de l'image $I_{recto}^c$ (resp. $I_{verso}^c$).

Dans un mode de réalisation, l'énergie $E_{recto}^c$ (resp. $E_{verso}^c$) est calculée en comptant les pixels de l'image $I_{recto}^c$ (resp. $I_{verso}^c$) dont la valeur est supérieure à un seuil prédéfini.

Dans un mode de réalisation, l'énergie $E_{recto}^c$ (resp. $E_{verso}^c$) est une valeur filtrée correspondant à un quantile donné. Une valeur filtrée V correspondant à un quantile donné est une valeur telle qu'une proportion prédéfinie des pixels d'une image ont une valeur filtrée inférieure *à V* (en valeur absolue), les autres pixels ayant une valeur supérieure ou égale à *V*. On pourra par exemple rechercher une valeur de pixel telle que 95% des pixels de l'image ont une valeur inférieure à V. Dans ce cas, l'énergie $E_{recto}^c$ (resp. $E_{verso}^c$)=*V*.

Dans un mode de réalisation, les images *I*$_{recto}$ et *I*$_{verso}$ sont de tailles différentes. Dans ce cas, l'énergie $E_{recto}^c$ (resp. $E_{verso}^c$) est une énergie moyenne des pixels de l'image *I*$_{recto}$ (resp.*I*$_{verso}$) correspondant à l'énergie totale de l'image divisée par le nombre de pixels de l'image.

Dans un mode de réalisation, lorsque les images *I*$_{recto}$ et *I*$_{verso}$ sont des images couleur, on prend en compte la présence de plusieurs composantes dans le calcul de la valeur représentative de l'entropie si nécessaire. Lorsqu'une seule composante de l'image *I*$_{recto}$ (resp. *I*$_{verso}$) est utilisée lors de l'application de la méthode de détection de contours, une seule valeur représentative de l'entropie est calculée. Lorsque toutes les composantes de l'image *I*$_{recto}$ (resp. *I*$_{verso}$) sont utilisées lors de l'application de la méthode de détection de contours, une valeurs représentative de l'entropie est calculée sur chaque composante et la valeur représentative de l'entropie d'une image est par exemple la somme des valeurs représentatives de l'entropie de chaque composante.

Dans un autre mode de réalisation, l'entropie de l'image est le maximum des entropies de chaque composante.

Dans certains cas, l'écart entre l'énergie $E_{recto}^c$ et l'énergie $E_{verso}^c$ peut être faible. Par exemple :

$$E^c_{recto} \times 0.98 \le E^c_{verso} < E^c_{recto} \times 1.02$$

Dans ce cas, il est difficile de distinguer avec une fiabilité suffisante la face utile de la face inutile. Lorsque l'écart entre l'énergie $E^c_{recto}$ et l'énergie $E^c_{verso}$ est inférieur à un seuil prédéterminé, les images $I_{recto}$ et $I_{verso}$ sont envoyées toutes les deux au dispositif de ROC. Le seuil prédéterminé peut être fixé par un opérateur ou déterminé par apprentissage sur un ensemble d'images. On peut alors laisser le dispositif de ROC extraire et stocker les informations importantes contenues dans les deux faces ou déléguer au dispositif de ROC l'identification de la face utile en fonction des informations qu'il extrait des deux images. Par contre, si l'écart entre l'énergie $E^c_{recto}$ et l'énergie $E^c_{verso}$ est supérieur au seuil prédéterminé, la page associée à l'énergie la plus élevée est déclarée « page utile ».

Dans un mode de réalisation le filtre passe haut utilisé par la méthode de détection de contours est mis en oeuvre par un filtre passe haut à réponse impulsionnelle finie (RIF) (Finite Impulsional Response (FIR) en terminologie anglo-saxonne) à deux dimensions (2D) non séparable.

Toutefois, il est connu qu'une application d'un filtre RIF 2D non séparable à une image engendre un coût calculatoire important. Dans un mode de réalisation, on préfère utiliser un filtre RIF 2D séparable. Un filtre RIF 2D séparable peut être mis en oeuvre en appliquant successivement selon un ordre d'application déterminé un filtre RIF à une dimension (1D) vertical et un filtre RIF 1D horizontal.

L'application d'un filtre à une image consiste à appliquer une convolution entre le filtre et les pixels de l'image. Un filtre adapté au filtrage d'une image est représenté par un ensemble de coefficients de filtre.

Un exemple de filtre passe haut RIF 1D est un filtre comportant 7 coefficients :

(-0.1 , 0.25 , -0.4 , 0.25 , -0.4 , 0.25 , -0.1)

Lors du filtrage des images $I_{verso}$ et $I_{recto}$, ce filtre est appliqué horizontalement puis verticalement (ou verticalement puis horizontalement).

Appliquer successivement un filtre passe haut FIR 1D horizontal, puis un filtre passe haut 1D vertical (ou inversement) pour mettre en oeuvre un filtre passe haut FIR 2D peut s'avérer problématique. En effet, dans ce cas, des zones de pixels ne comportant que des hautes fréquences horizontales ou que des hautes fréquences verticales peuvent être supprimées. Or les zones ne comportant que des hautes fréquences horizontales sont représentatives de contours verticaux et les zones ne comportant que des hautes fréquences verticales sont représentatives de contours horizontaux.

Dans un mode de réalisation, le filtre passe haut utilisé dans l'étape 102 est mis en oeuvre par un filtre à anneaux concentriques. Les filtres à anneaux concentriques sont des filtres déterminés à partir d'un filtre RIF 1D symétriques. Les filtres à anneaux concentriques permettent de conserver des propriétés de filtrage intéressantes du filtre RIF 1D et notamment la fréquence de coupure. Les filtres à anneaux concentriques sont des filtres 2D. Les filtres à anneaux concentriques n'ont, par conséquent, pas les mêmes défauts que les filtres 2D séparables liés à l'application successive d'un filtre 1D dans une direction de l'image puis d'un filtre 1D dans une seconde direction de l'image. Par ailleurs, nous verrons par la suite que certaines mises en oeuvre tirant bénéfice de propriétés des filtres à anneaux concentriques ont un coût calculatoire inférieur aux filtres 2D non séparables et séparables classiques.

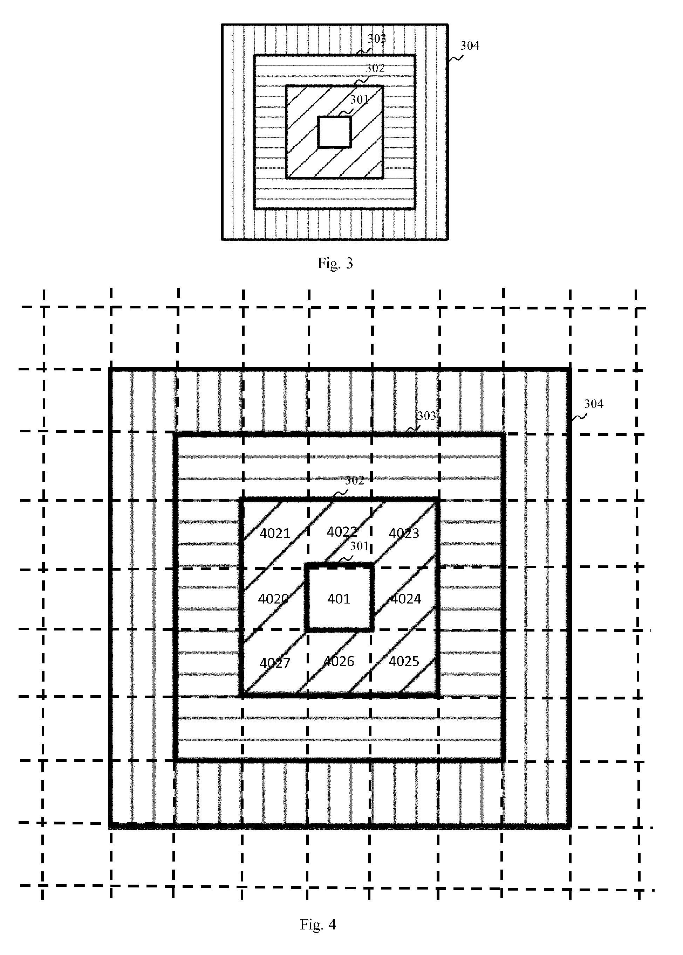

Un filtre à anneaux concentriques est constitué d'une pluralité d'anneaux. La **Fig. 3** représente un filtre à anneaux concentriques comportant quatre anneaux 301, 302, 303 et 304. L'anneau 301 correspondant à un pixel est appelé anneau central. Chaque anneau est associé à un coefficient. Pour obtenir le coefficient associé à chaque anneau, on exploite la symétrie d'un filtre 1D d'origine. L'exploitation de cette symétrie permet de considérer chaque pixel d'une paire de pixels symétriques par rapport à l'anneau central comme s'il faisait partie d'un anneau 1D. On transpose alors les coefficients de chaque anneau 1D à un anneau 2D correspondant au filtre à anneaux concentriques. Concrètement, lors de la convolution du filtre à anneaux concentriques avec une zone d'une image, on applique au pixel central un coefficient égal au coefficient central du filtre 1D et on applique aux pixels de chaque autre anneau un coefficient égal au double du coefficient du filtre 1D correspondant divisé par le nombre de pixels concernés par l'anneau.

La **Fig. 4** représente sous forme schématique un exemple d'application d'un filtre à anneaux concentriques sur une portion d'une image. Les pixels de l'image sont ici représentés sous la forme de carrés pointillés. Dans cet exemple, le filtre à anneaux concentriques utilisé est le filtre représenté en Fig. 3. De plus, le filtre 1D utilisé pour créer le filtre à anneaux concentriques est un filtre à sept coefficients :

*(X(3), X(2), X(1), X(0), X(1), X(2), X(3)*

où les *X(k)* représentent les coefficients du filtre 1D.

Lors de la convolution du filtre à anneaux concentriques avec l'image, pour chaque pixel de l'image pour lequel on souhaite obtenir une valeur de pixel filtré, on multiplie le pixel central 401 par un coefficient $X(0)_{FAC} = X(0)$ correspondant à l'anneau central 301. Pour l'anneau 302, on multiplie la valeur de chaque pixel correspondant à l'anneau 302 par un coefficient $X(1)_{FAC} = \dfrac{2 \times X(1)}{8}$. Pour l'anneau 303, on multiplie chaque pixel correspondant à l'anneau 303 par un coefficient $X(2)_{FAC} = \dfrac{2 \times X(2)}{16}$. Pour l'anneau 304, on multiplie chaque pixel correspondant à l'anneau 304 par un coefficient $X(3)_{FAC} = \dfrac{2 \times X(3)}{24}$. Les valeurs obtenues sont alors sommées pour obtenir la valeur du pixel filtré. L'obtention d'une valeur de pixel filtré avec le filtre de la Fig. 3 nécessite donc quarante-neuf multiplications et quarante-huit additions.

Dans l'exemple de la Fig. 4, le filtre 1D utilisé pour créer le filtre à anneaux concentriques est un filtre symétrique à 7 coefficients. Toutefois, un filtre d'une autre taille pourrait tout aussi bien être utilisé. Dans ce cas, une formule plus générale peut être utilisée pour déterminer les coefficients du filtre à partir des coefficients d'un filtre 1D symétrique:

$$X(k)_{FAC} = \frac{2 \times X(k)}{8 \times (k)}, k \geq 1$$

où $k$ est un numéro représentatif de l'anneau, l'anneau central ayant le numéro 0 et $k$ étant incrémenté d'une unité lorsqu'on passe d'un anneau à un anneau de taille immédiatement supérieure. L'utilisation d'un filtre à anneaux concentriques pour mettre en oeuvre le filtre passe haut permet de mieux préserver certaines fréquences importantes de l'image correspondant à des contours qu'un filtre passe haut 2D séparable supprimerait. Toutefois, le coût calculatoire du filtre à anneaux concentriques est le même que celui d'un filtre passe haut 2D non séparable lorsque le filtre à anneaux concentrique est mis en oeuvre selon le procédé décrit ci-dessus. Nous verrons par la suite un procédé de mise en oeuvre d'un filtre à anneaux concentriques ayant un coût calculatoire beaucoup plus faible pour un résultat identique.

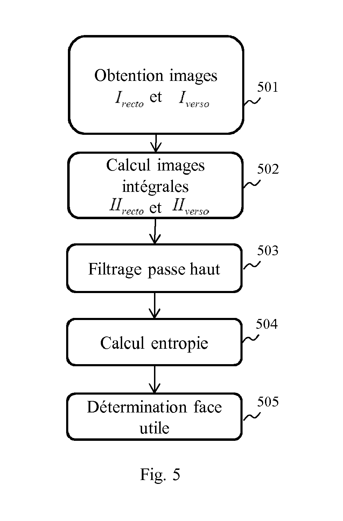

La **Fig. 5** représente schématiquement un deuxième exemple de procédé d'identification d'une face utile dans un document recto-verso. Dans cet exemple, le filtre passe haut utilisé lors de la détection de contours est mis en oeuvre par un filtre à anneaux concentriques. Il est à remarquer que la mise en oeuvre du filtre à anneaux concentriques est accélérée en appliquant ce filtre sur des images intégrales $II_{recto}$ et $II_{verso}$ obtenues respectivement à partir des images $I_{recto}$ et $I_{verso}$.

Une image intégrale est une représentation d'une image d'origine permettant de calculer rapidement des sommes de valeurs de pixels dans une zone rectangulaire. Une image intégrale est de même taille que l'image d'origine. La valeur de chaque pixel d'une image intégrale est la somme des valeurs des pixels de l'image d'origine situés au dessus et à gauche d'un pixel correspondant de l'image intégrale. Les valeurs des pixels d'une image intégrale $II$ obtenue à partir d'une image d'origine $I$ sont calculées de la manière suivante :

$$II(u, v) = \sum_{x \leq u; y \leq v} I(x, y) = I(u, v) + II(u - 1, v) + II(u, v - 1) - II(u - 1, v - 1)$$

où $II(u, v)$ est la valeur d'un pixel d'une image intégrale $II$ à une position $(u,v)$ et $I(x,y)$ est la valeur d'un pixel de l'image d'origine $I$ à une position $(x,y)$.

La représentation d'une image d'origine par une image intégrale permet d'accéder à une somme de valeurs de pixels dans une zone rectangulaire en quatre accès à l'image intégrale et en un temps constant quelle que soit la taille de la zone. Lorsque les quatre coins d'une zone rectangulaire sont représentés respectivement par les coordonnées du coin en haut à gauche (x1,y1), du coin en haut à droite (x2,y2), du coin en bas à droite (x3,y3) et du coin en bas à gauche (x4, y4), la somme $S_{rect}$ des valeurs des pixels dans cette zone rectangulaire est obtenue de la manière suivante :

$$S_{rect} = II(x1, y1) + II(x3, y3) - II(x2, y2) - II(x4, y4)$$

L'utilisation d'une image intégrale permet d'accélérer la mise en oeuvre du filtre à anneaux concentriques. Comme nous l'avons vu plus haut, une image intégrale permet de calculer rapidement la somme des valeurs des pixels d'une zone rectangulaire. Par différence entre deux carrés concentriques, une image intégrale permet de calculer rapidement la somme des valeurs des pixels correspondant à un anneau du filtre à anneaux concentriques. Par exemple, la somme des valeurs des pixels de l'anneau 302 peut être calculée comme la différence entre la somme des valeurs des pixels du carré formé des pixels 4020 à 4027 et 401, et la somme des valeurs des pixels du carré formé par le pixel 401.

Lors d'un filtrage par un filtre à anneaux concentriques, pour un anneau donné, chaque valeur des pixels correspondant à l'anneau est multipliée par un même coefficient du filtre à anneaux concentriques et les valeurs obtenues sont sommées. La distributivité de la multiplication permet de réaliser cette opération en sommant les valeurs des pixels correspondant à l'anneau, puis en multipliant la somme obtenue par le coefficient du filtre à anneaux concentriques correspondant à l'anneau. L'utilisation de l'image intégrale est un moyen rapide de calculer la somme des valeurs des pixels correspondant à un anneau. Le calcul d'un pixel filtré par le filtre à anneaux concentriques décrit en relation avec la Fig. 3 lorsqu'on remplace l'image d'origine par l'image intégrale nécessite alors quatre multiplications et dix-huit additions. On considère ici que la valeur du pixel central 401 est obtenue à partir de l'image d'origine, ce qui ne nécessite aucune addition ni multiplication. De plus, on considère que lors de l'application du filtre, les sommes des pixels d'un anneau sont calculées en prenant les anneaux par ordre croissant. De cette manière, la somme correspondant à un anneau peut être conservée et réutilisée dans le calcul de la somme correspondant à un anneau de taille immédiatement supérieure.

Dans un mode de réalisation, on peut mettre en oeuvre le filtre à anneaux concentriques sur l'image intégrale sans passer par le calcul des sommes des valeurs des pixels associées à chaque anneau du filtre. Ceci permet de diminuer encore le coût calculatoire de mise en oeuvre du filtre à anneaux concentriques. Dans ce cas, on remplace chaque somme calculée sur un anneau du filtre, par une somme calculée sur un carré (appelé aussi « disque » par analogie avec le terme anneau) partageant une frontière extérieure avec l'anneau. Par exemple, l'anneau 302 partage sa frontière extérieure avec le carré contenant les pixels 401, et 4020 à 4027. L'application du filtre à anneaux concentriques sur des carrés nécessite le calcul de nouveaux coefficients $Xi^*_{FAC}$ adapté à l'utilisation de carrés. Le coefficient associé au carré central reste inchangé :

$$X(0)^*_{FAC} = X(0)_{FAC} = X(0)$$

Les autres coefficients du filtre adapté à l'utilisation de carrés sont alors calculés de la manière suivante :

$$X(k)^*_{FAC} = X(k)_{FAC} - X(k+1)_{FAC} = \frac{2 \times X(k)}{8 \times (k)} - \frac{2 \times X(k+1)}{8 \times (k+1)}$$

Nous reprenons l'exemple de mise en oeuvre du filtre à anneaux concentriques représenté en Fig. 4. Toutefois, ici, les sommes sont calculées sur des carrés et non sur des anneaux. Dans cet exemple, la somme correspondant au carré central est multipliée par $X(0)^*_{FAC}$. La somme correspondant au carré partageant sa frontière extérieure avec l'anneau 302 est multipliée par $X(1)^*_{FAC}$. La somme correspondant au carré partageant sa frontière extérieure avec l'anneau 303 est multipliée par $X(2)^*_{FAC}$. La somme correspondant au carré partageant sa frontière extérieure avec l'anneau 304 est multipliée par $X(3)^*_{FAC}$. Les sommes obtenues sont ensuite additionnées pour obtenir la valeur du pixel filtré. Dans ce mode de réalisation, l'obtention d'une valeur de pixel filtré nécessite donc quatre multiplications et quinze additions.

Le procédé décrit en relation avec la Fig. 5 débute par une étape 501 identique à l'étape 101 déjà décrite. Dans une étape 502, le dispositif d'identification 20 calcule les images intégrales $II_{verso}$ et $II_{recto}$ à partir respectivement des images $I_{verso}$ et $I_{recto}$. Dans une étape 503, une détection de contours est mise en oeuvre sur les images $II_{verso}$ et $II_{recto}$. Cette détection de contours utilise un filtre passe haut mis en oeuvre par un filtre à anneaux concentriques. Dans un mode de réalisation, la mise en oeuvre du filtre à anneaux concentriques utilise le mode de réalisation de ce filtre basé sur le calcul de sommes sur des anneaux. Dans un mode de réalisation plus optimisé, on peut aussi utiliser le mode de réalisation de ce filtre basé sur le calcul de sommes sur des carrés.

Dans une étape 504, le dispositif d'identification 20 calcule une valeur représentative de l'entropie pour chaque image filtrée. Cette étape est identique à l'étape 103. Dans une étape 505, la face utile est déterminée par le dispositif d'identification 20. Cette étape est identique à l'étape 104.

Les exemples de procédés d'identification décrits en relation avec les Fig. 1 et 5 considèrent des documents recto-verso. Ces procédés sont aisément adaptables à des documents contenant plus de deux pages. Dans un mode de réalisation, un document à numériser contient plus de deux pages, certaines pages étant importantes alors que d'autres ne le sont pas. Une image numérisée est obtenue pour chaque page du document. Une détection de contours identique à celle mise en oeuvre dans les étapes 102 (ou 503 en passant par une étape intermédiaire de calcul d'une image intégrale) est appliquée à chacune des images numérisées. Une valeur représentative de l'entropie de chaque image obtenue après détection de contours est ensuite calculée selon la méthode décrite en relation avec l'étape 103. Une page est déclarée «page utile » si la valeur représentative de l'entropie associée à l'image de cette page est supérieure à un seuil prédéfini. Le seuil prédéfini peut être fixé par un opérateur ou déterminé par apprentissage sur un ensemble d'images.

Dans un autre mode de réalisation adapté à un document à numériser contenant plus de deux pages, une image numérisée est obtenue pour chaque page du document. Une détection de contours identique à celle mise en oeuvre dans les étapes 102 (ou 503 en passant par une étape intermédiaire de calcul d'une image intégrale) est appliquée à chacune des images numérisées. Une valeur représentative de l'entropie de chaque image obtenue après détection de contours est ensuite calculée selon la méthode décrite en relation avec l'étape 103. Une valeur maximum est déterminée parmi les valeurs représentatives de l'entropie calculée. Un écart entre ladite valeur maximum et chaque autre valeur représentative de l'entropie est calculée. L'image associée à la valeur maximum est déclarée « page utile ». De plus, chaque image pour laquelle la valeur de l'écart est inférieure au second seuil prédéfini est déclarée « page utile ». Chaque image pour laquelle la valeur de l'écart est supérieur au seuil est déclarée « page inutile ».

La **Fig. 2** illustre schématiquement un exemple d'architecture matérielle du dispositif d'identification 20. Le dispositif d'identification 20 comporte, reliés par un bus de communication 205 : un processeur ou CPU (« Central Processing Unit » en anglais) 200; une mémoire vive RAM (« Random Access Memory » en anglais) 201; une mémoire morte ROM (« Read Only Memory » en anglais) 202; une unité de stockage 203 ou un lecteur de support de stockage, tel qu'un lecteur de cartes SD (« Secure Digital » en anglais) ou de clés USB (« Universal Serial Bus » en anglais) ou un disque dur HDD (« Hard Disk Drive » en anglais); au moins une interface 204 permettant d'échanger des données avec d'autres dispositifs. L'interface 204 permet par exemple d'obtenir les images $I_{verso}$ et $I_{recto}$ d'un système de numérisation et de fournir le résultat d'une identification ou une image représentative d'une face utile d'un document à un dispositif de ROC.

Le processeur 200 est capable d'exécuter des instructions chargées dans la RAM 201 à partir de la ROM 202, d'une mémoire externe (non représentée), d'un support de stockage, ou d'un réseau de communication. Lorsque le dispositif d'identification 20 est mis sous tension, le processeur 200 est capable de lire de la RAM 201 des instructions et de les exécuter. Ces instructions forment un programme d'ordinateur causant la mise en oeuvre, par le processeur 200, de tout ou partie des algorithmes et étapes décrits en relation avec le dispositif d'identification 20 et les Fig. 1 et 5.

Tout ou partie des algorithmes et étapes décrits précédemment peut ainsi être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

**Revendications**

**1.**   Procédé d'identification d'au moins une page utile dans un document comprenant une pluralité de pages, une page utile comprenant des informations utiles pour une application cible destinée à utiliser ces informations, **caractérisé en ce que** le procédé comprend les étapes suivantes de :

- obtention (101, 501) pour chaque page du document d'une image numérisée résultant d'une numérisation de la dite page,
- détection (102, 503) de contours contenus dans chacune des images numérisées de manière à obtenir pour chacune des images numérisées une image représentative de contours, pour chacune des images représentatives de contours, calcul (103, 504) d'une valeur représentative d'une entropie de l'image représentative de contours,
- détermination (104, 505) d'au moins une page utile à partir des valeurs représentatives d'entropies obtenues.

**2.**   Procédé selon la revendication 1, **caractérisé en ce que** lorsque, parmi les valeurs représentatives d'une entropie calculée, une valeur représentative d'une entropie est plus élevée que l'autre ou les autres valeurs représentatives d'une entropie, la page correspondant à la valeur représentative d'une entropie la plus élevée est une page utile.

**3.**   Procédé selon la revendication 1, **caractérisé en ce que**, une valeur plus élevée est déterminée parmi les valeurs représentatives d'une entropie calculées, un écart est déterminé entre la valeur la plus élevée et chaque autre valeur, et si chaque écart est supérieur à un seuil, la page correspondant à la valeur représentative d'une entropie la plus élevée est une page utile.

4. Procédé selon la revendication 1, **caractérisé en ce que**, une valeur plus élevée est déterminée parmi les valeurs représentatives d'une entropie calculées, un écart est déterminé entre la valeur la plus élevée et chaque autre valeur, et la page correspondant à la valeur représentative d'une entropie la plus élevée est une page utile, chaque autre page pour laquelle l'écart est inférieur à un seuil est une page utile, chaque autre page pour laquelle l'écart est supérieur au seuil n'étant pas une page utile.

5. Procédé selon la revendication 1, 2, 3 ou 4, **caractérisé en ce que** le document est un document recto-verso comprenant deux pages.

6. Procédé selon l'une quelconque des revendications 1 à 5, **caractérisé en ce que** la détection de contours est mise en oeuvre par un filtrage utilisant un filtre passe haut.

7. Procédé selon la revendication 6, **caractérisé en ce que** le filtre passe haut est un filtre à anneaux concentriques.

8. Procédé selon la revendication 6 ou 7, **caractérisé en ce que** le filtre passe haut est appliqué sur les images numérisées.

9. Procédé selon la revendication 7, **caractérisé en ce que** le filtrage passe haut est appliqué sur des images intégrales obtenues à partir des images numérisées.

10. Procédé selon l'une quelconque des revendications 1 à 9, **caractérisé en ce que** les valeurs représentatives d'une entropie sont des valeurs représentatives d'une énergie des images représentatives de contours.

11. Procédé selon la revendication 10, **caractérisé en ce qu'**une valeur représentative d'une énergie d'une images de contours est une somme de carrés de valeurs de pixels de ladite image de contours, ou une variance de l'image de contours, ou un nombre de pixels de l'image de contours dont une valeur de pixel est supérieure à un seuil, ou une valeur de pixel pour laquelle un pourcentage prédéterminé de pixels de l'image de contours ont une valeur de pixel inférieure à ladite valeur de pixel.

12. Dispositif d'identification d'au moins une page utile dans un document comprenant une pluralité de pages, une page utile comprenant des informations utiles pour une application cible destinée à utiliser ces informations, **caractérisé en ce que** le dispositif comprend :

   - des moyens d'obtention (101, 501), pour chaque page du document, d'une image numérisée résultant d'une numérisation de la dite page,
   - des moyens de détection (102, 503) de contours contenus dans chacune des images numérisées de manière à obtenir pour chacune des images numérisées une image représentative de contours,
   - des moyens de calcul (103, 504), pour chacune des images représentatives de contours, d'une valeur représentative d'une entropie de l'image représentative de contours,
   - des moyens de détermination (104, 505) d'au moins une page utile à partir des valeurs représentatives d'entropies obtenues.

13. Système de numérisation comprenant un dispositif d'identification d'au moins une page utile dans un document comprenant une pluralité de pages selon la revendication 12.

14. Système de numérisation mettant en oeuvre le procédé d'identification d'au moins une page utile dans un document comprenant une pluralité de pages selon l'une quelconque des revendications 1 à 11.

15. Produit programme d'ordinateur, **caractérisé en ce qu'**il comporte des instructions pour mettre en oeuvre, par un dispositif, le procédé selon l'une quelconque des revendications 1 à 11, lorsque ledit programme est exécuté par un processeur dudit dispositif.

16. Moyens de stockage, **caractérisés en ce qu'**ils stockent un programme d'ordinateur comportant des instructions pour mettre en oeuvre, par un dispositif, le procédé selon l'une quelconque des revendications 1 à 11 lorsque ledit programme est exécuté par un processeur dudit dispositif.

Obtention images
$I_{recto}$ et $I_{verso}$

101

Détection de
contours

102

Calcul entropie

103

Détermination face
utile

104

Fig. 1

200
CPU

201
RAM

202
ROM

205

HDD
203

COM
204

20

Fig. 2

Fig. 3

Fig. 4

Obtention images
$I_{recto}$ et $I_{verso}$

501

Calcul images
intégrales
$II_{recto}$ et $II_{verso}$

502

Filtrage passe haut

503

Calcul entropie

504

Détermination face
utile

505

Fig. 5

Europäisches Patentamt
European Patent Office
Office européen des brevets

# RAPPORT DE RECHERCHE EUROPEENNE

Numéro de la demande

EP 15 16 8725

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2007/206855 A1 (CAMPBELL RICHARD J [US] CAMPBELL RICHARD JOHN [US]) 6 septembre 2007 (2007-09-06) * alinéas [0024], [0028] - [0030], [0035] - [0036], [0041] * | 1-16 | INV. G06K9/00 G06K9/32 G06K9/46 |
| X | US 2010/074526 A1 (CAMPBELL RICHARD JOHN [US]) 25 mars 2010 (2010-03-25) * alinéas [0005], [0020] - [0022], [0031] - [0032], [0047] * | 1-16 | |
| A | US 2008/075361 A1 (WINN JOHN [GB] ET AL) 27 mars 2008 (2008-03-27) * alinéas [0024] - [0027], [0033] - [0036], [0044] - [0049], [0059] - [0061] * | 1-16 | |
| A | GLLAVATA J ET AL: "Text detection in images based on unsupervised classification of high-frequency wavelet coefficients", PATTERN RECOGNITION, 2004. ICPR 2004. PROCEEDINGS OF THE 17TH INTERNAT IONAL CONFERENCE ON CAMBRIDGE, UK AUG. 23-26, 2004, PISCATAWAY, NJ, USA,IEEE, LOS ALAMITOS, CA, USA, vol. 1, 23 août 2004 (2004-08-23), pages 425-428, XP010724279, DOI: 10.1109/ICPR.2004.1334146 ISBN: 978-0-7695-2128-2 * Section 3; figure 1 * | 1-16 | **DOMAINES TECHNIQUES RECHERCHES (IPC)** G06K |

-/--

Le présent rapport a été établi pour toutes les revendications

| Lieu de la recherche | Date d'achèvement de la recherche | Examinateur |
|---|---|---|
| La Haye | 28 septembre 2015 | Meurisse, Wim |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 15 16 8725

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JIA LI ET AL: "Context-Based Multiscale Classification of Document Images Using Wavelet Coefficient Distributions", IEEE TRANSACTIONS ON IMAGE PROCESSING, IEEE SERVICE CENTER, PISCATAWAY, NJ, US, vol. 9, no. 9, 1 septembre 2000 (2000-09-01), XP011025652, ISSN: 1057-7149 * Section II E, III B; figures 2,5 * ----- | 1-16 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 28 septembre 2015 | Meurisse, Wim |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 ..............................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 16 8725

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-09-2015

| Document brevet cité au rapport de recherche | Date de publication | Membre(s) de la famille de brevet(s) | Date de publication |
|---|---|---|---|
| US 2007206855 A1 | 06-09-2007 | AUCUN | |
| US 2010074526 A1 | 25-03-2010 | JP 4745430 B2<br>JP 2010081604 A<br>US 2010074526 A1 | 10-08-2011<br>08-04-2010<br>25-03-2010 |
| US 2008075361 A1 | 27-03-2008 | US 2008075361 A1<br>US 2011064303 A1 | 27-03-2008<br>17-03-2011 |

EPO FORM P0460

Pour tout renseignement concernant cette annexe : voir Journal Officiel de l'Office européen des brevets, No.12/82